Europäisches Patentamt

European Patent Office

Office européen des brevets

(11) Veröffentlichungsnummer: **0 208 883 B1**

# (12) EUROPÄISCHE PATENTSCHRIFT

(45) Veröffentlichungstag der Patentschrift: **12.08.92**

(21) Anmeldenummer: **86107193.4**

(22) Anmeldetag: **27.05.86**

(51) Int. Cl.⁵: **B01D 61/00**

Die Akte enthält technische Angaben, die nach dem Eingang der Anmeldung eingereicht wurden und die nicht in dieser Patentschrift enthalten sind.

(54) **Wickelmembran Filterkerze.**

(30) Priorität: **18.07.85 DE 3525682**

(43) Veröffentlichungstag der Anmeldung:
**21.01.87 Patentblatt 87/04**

(45) Bekanntmachung des Hinweises auf die Patenterteilung:
**12.08.92 Patentblatt 92/33**

(84) Benannte Vertragsstaaten:
**AT BE CH DE FR GB IT LI LU NL SE**

(56) Entgegenhaltungen:
**EP-A- 0 088 459**
**FR-A- 2 229 438**
**GB-A- 2 164 871**
**US-A- 3 872 014**

(73) Patentinhaber: **Amafilter Membrantechnik GmbH**
**Am Pferdemarkt 11**
**W-3012 Langenhagen(DE)**

(72) Erfinder: **Kohlheb, Robert, Dr.**
**Andershäuser Strasse 15**
**W-3352 Einbeck(DE)**

(74) Vertreter: **Köster, Hajo, Dr. et al**
**Jaeger, Steffens & Köster Patentanwälte**
**Pippinplatz 4a**
**W-8035 München-Gauting(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

## Beschreibung

Die Erfindung betrifft eine Wickelmembran-Filterkerze der im Oberbegriff des Anspruchs 1 genannten Art.

Wickelmembran-Filterkerzen werden, einzeln oder zu mehreren in einem Gehäuse eingeschlossen, in Serie oder parallel zueinandergeschaltet in den verschiedensten Bereichen der Trenntechnik eingesetzt, so beispielsweise zur Feinfiltration, Mikrofiltration, Ultrafiltration, zur Umkehrosmose, Pervaporation und Gaspermeation. Der Begriff "Filter" in allen seinen im Rahmen der vorliegenden Erfindung benutzten Abwandlungen ist also nicht auf reine Filtrationsverfahren beschränkt zu verstehen, sondern soll ausdrücklich auch filtrationsähnliche Trennverfahren wie beispielsweise die vorstehend genannten Verfahren einschließen, insbesondere die Umkehrosmose. Der Begriff "Filtration" ist daher im folgenden als Kurzbezeichnung für die vorstehend genannten Trennverfahren zu verstehen.

Bekannte Wickelmembran-Filterkerzen weisen üblicherweise auf dem gesamten Strömungsweg, den das zu behandelnde Medium über die Membranfläche nimmt, stets relativ zur Membranoberfläche die gleiche Strömungsgeschwindigkeit auf, und zwar unabhängig davon, ob die Strömung im einzelnen axial, tangential oder radial geführt ist.

Eine derartige Wickelmembran-Filterkerze ist beispielsweise in der FR-A-2 229 438 beschrieben. Bei dieser bekannten Wickelmembran-Filterkerze wird die zu reinigende Flüssigkeit tangential von außen in den Wickel eingeführt. Das Permeat wird durch das zentrale Rohr dieser Filterkerze abgeführt. Das Konzentrat wird an einer Stirnseite des Wickels in Axialrichtung aus dem Wickel geleitet.

Vom Funktionsablauf der Austausch- und Trennprozesse der hier in Rede stehenden Art wäre es durchaus erstrebenswert, daß frisch auf die Membranoberfläche zulaufende, zu behandelnde Medium zunächst mit geringerer Strömungsgeschwindigkeit über die Membranoberfläche zu führen, und die Strömungsgeschwindigkeit dann almählich und kontinuierlich zunehmend bis zum Ablauf des Mediums von der Membranoberfläche als Konzentrat zu erhöhen.

Letzteres ist bei der aus der US-A-3 872 014 bekannten Filterkerze der Fall. Die Membran-Strömungstasche bei dieser bekannten Vorrichtung ist durch eine zumindest im wesentlichen elastische, aufwickelbare Trennwand in zwei Teilströmungskanäle unterteilt. Diese Teilkanäle, die durch die in der Membranströmungstasche bzw. in dem zwischen zwei Membranen gebildeten Strömungskanal angeordnet ist, werden zwei, bezogen auf den Wickel axial übereinander liegende Teilkanäle gebildet. Beim Führen des zu behan delnden Mediums über die Membran wird die Strömungsgeschwindigkeit des zu behandelnden Mediums mit zunehmender Konzentration erhöht, da sich der wirksame Querschnitt der Teilkanäle verringert. Dadurch kann der mit zunehmender Konzentration des zu behandelnden Mediums zunehmende Tendenz zur Durchflußminderung der Membran begegnet werden.

Bei dieser bekannten Filterkerze wird das zu behandelnde Medium durch das zentrale Rohr, auf das die Membrantasche aufgewickelt ist, zugeführt, gelangt von dort in die Teilkanäle und wird wieder in das zentrale Zulaufrohr zurückgeführt, von wo es dann aus der Filterkerze abgeführt wird. Das Permeat fließt an den Stirnseiten dieser bekannten Wickelmembran-Filterkerze aus.

Aufgabe der vorliegenden Erfindung ist es, eine Wickelmembran-Filterkerze der letztgenannten Art dahingehend zu verbessern, daß diese Filterkerze insbesondere für biotechnologische Zwecke eingesetzt werden kann, bei dem das Permeat zentral aus der WickelMembran-Filterkerze herausgeführt wird.

Gelöst wird diese Aufgabe durch die Lehren der Ansprüche 1 und 2.

Die erfindungsgemäße Wickelmembran-Filterkerze besitzt ebenso wie die in der eingangs genannten US-A-3 872 014 beschriebene Filterkerze eine Trennwand, welche den Strömungskanal in mindestens zwei Teilkanäle unterteilt.

Die technische Ausgestaltung dieser Trennwand kann in der Praxis auf vielfältige und prinzipiell beliebige Art und Weise erfolgen. Im einfachsten Fall kann die Trennwand beispielsweise als Klebnaht oder Schweißnaht ausgebildet sein, die die beiden den Strömungskanal bildenden Membranen direkt miteinander verbindet. Alternativ kann ein Materialstreifen zwischen beide Membranen eingebracht sein, der mit den beiden Membranen dicht verklebt oder verschweißt ist, und zwar in der Weise, daß jede der Membranen jeweils nur mit dem Membranstreifen verbunden ist, ohne daß die beiden Membranen unmittelbar direkt miteinander verbunden sind. Bei Verwendung üblicher, meist gitterartiger Abstandhalter im Strömungskanal zwischen den beiden Membranen ist darauf zu achten, daß die Trennwand auch das Abstandhaltergitter abdichtend zwischen den beiden innenliegenden Membranoberflächen überbrückt. Die Trennwand ist in diesem Fall vorzugsweise als eine den Abstandhalter dicht, homogen und integriert durchsetzende, vorzugsweise einstückig mit diesem ausgebildete Schnur ausgestattet. Dabei kann diese Schnur, wenn der Abstandhalter aus einem Kunststoffgitter besteht, aus demselben Kunststoff einstückig mit dem Abstandhalter hergestellt sein, oder kann nach Fertigstellung des Abstandhalters diesen dicht durchsetzend aufgebracht werden, beispielsweise in Form einer Elastomerschnur, in die das Gitterwerk des Abstandhalters einvulkanisiert wird. Dabei ist es insbesondere dann, wenn die Trennwand aus einem elastischen Werkstoff besteht, keineswegs unbedingt erforderlich, daß die Trennwand von vornherein fest mit den Membranen verbunden wird, die den zu unterteilenden Strömungskanal bilden. Vielmehr reicht es in aller Regel aus, wenn eine entsprechende Membran-Abstandhalter-Membran-Struktur unter mäßiger Vorspannung zu einem Wickel aufgewickelt wird und der so hergestellte Wickel in an sich bekannter und geeigneter Weise, beispielsweise durch Überziehen eines mehr oder minder elastischen Gewebestrumpfes oder eines geeigneten schrumpffähigen Werkstoffs unter Spannung fixiert wird. Die bei einem solcherart hergestellten Wickel aufgebrachte, bezogen auf den fertigen Wickel, radiale Wickelspannung reicht aus, um in der benötigten Weise die Dichtheit zwischen den beiden im Strömungskanal zwischen zwei Membranen ausgebildeten Teilkanälen zu gewährleisten.

Die Trennwand ist in der Membranabwicklung linear und zu den Längskanten der Abwicklung, also zu den die Wickelstirnseiten bildenden Kanten, geneigt verlaufend ausgebildet. Im aufgewickelten Zustand beschreibt die Trennwand also eine Schraubenlinie, die spiralig verläuft, und zwar je nach Neigung eine sich von radial innen nach radial außen, bei Betrachtung in gleicher Drehrichtung, erweiternden oder verengenden spiraligen Schraubenlinie. Die axiale Höhe dieser Schraubenlinie ist vorzugsweise zumindest im wesentlichen gleich der halben Wickelhöhe. Dadurch wird bewirkt, daß der Querschnitt am Ausgang des einen Teilkanals gleich dem Querschnitt des Eingangs des folgenden Teilkanals ist. Der Strömungsgeschwindigkeitgradient des über die Membranoberfläche geführten Mediums verläuft dadurch auch am Teilkanalübergang stetig.

Die Erfindung ist im folgenden anhand von Ausführungsbeispielen in Verbindung mit den Zeichnungen näher erläutert.

Es zeigen:

Fig. 1   ein erstes Ausführungsbeispiel der Wickelmembran-Filterkerze in Abrollung;

Fig. 2   das in Fig. 1 gezeigte Ausführungsbeispiel im Querschnitt durch den aufgerollten Wickel; und

Fig. 3   ein zweites Ausführungsbeispiel der Wickelmembran-Filterkerze.

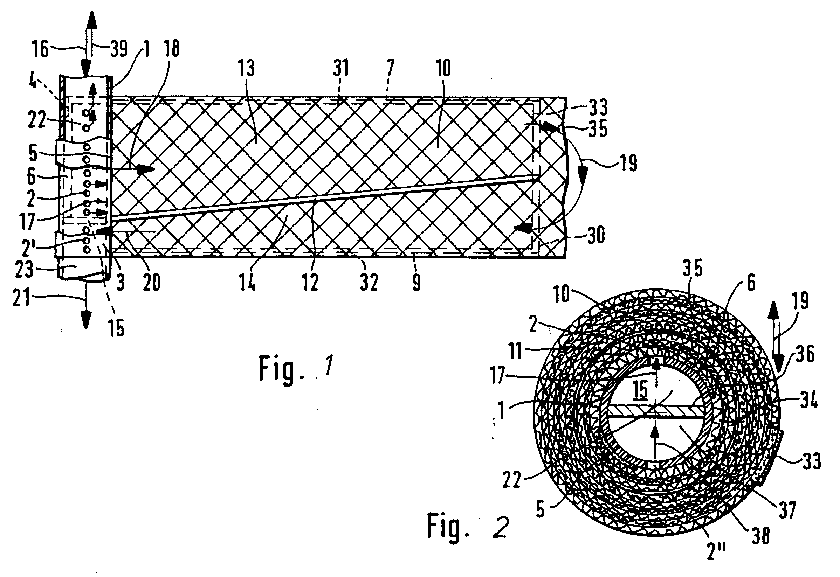

In der Fig. 1 ist ein erstes Ausführungsbeispiel der Wickelmembran-Filterkerze gemäß der Erfindung in abgerolltem Zustand des Membranwickels, teilsweise im Axialschnitt, dargestellt. Ein Zentralrohr 1, auf dessen Mantel in axialer Richtung eine Reihe von Durchtrittsöffnungen 2,2' ausgebildet ist, ist fest und fluiddicht mit zwei Membranen 3,4 verbunden. Die Membranen 3,4 sind mit Klebnähten 5,6, die einander diametral gegenüberliegen, am Zentralrohr 1 und mit Klebnähten 7,9 oder entsprechenden Schweißnähten miteinander fest und fluiddicht verbunden. Die in der beschriebenen Weise miteinander verbundenen Membranen 3,4 bilden also eine Membrantasche, die einen an den Wickelstirnseiten, also entlang der Klebnähte 7,9, geschlossenen Strömungskanal 10 einschließt. Die beiden einander am Zentralrohr diametral gegenüberliegenden Klebnähte 5,6 sind dabei so gelegt, daß sich die Durchtrittsöffnungen 2,2' in den Strömungskanal 10 öffnen, der Strömungskanal 10 also hydrodynamisch frei mit dem inneren Hohlraum des Zentralrohres 1 kommuniziert.

Im Inneren des Strömungskanals 10 ist ein gebräuchlicher gitterförmiger Abstandhalter 35 angeordnet.

Der im Strömungskanal 10 liegende gitterförmige Abstandhalter 35 besteht aus Kunststoff, hier Polyethylen, und weist eine einstückig und fluiddicht mit dem Gitterwerk des Abstandhalters integrierte und an und mit diesem ausgeformte schnurartige lineare Verstärkung auf, die als Trennwand 12 den Strömungskanal 10 in zwei, bezogen auf den Wickel, axial übereinanderliegende Teilkanäle 13,14 unterteilt. Die Trennwand 12 ist ebenfalls fluiddicht am Mantel des Zentralrohres 1 angeschlossen, was hier dadurch bewirkt ist, daß der Abstandhalter mit der integrierten Trennwand 12 mit seiner Schmalseite auf dem Mantel des Zentralrohres 1 aufgeklebt ist.

In der aus Fig. 1 ersichtlichen Weise erstreckt sich die Trennwand 12 vom Zentralrohr 1 in den Strömungskanal 10 hinein, schräg zu den Klebnähten 7,9 verlaufend. Auf diese Weise entstehen zwei Teilkanäle 13,14, deren Strömungsquerschnitt sich vom breiteren Eingang bis zum schmaleren Ausgang kontinuierlich verjüngt. Auf der axialen Höhe, auf der die Trennwand 12 fluiddicht mit dem Mantel des Zentralrohres 1 verbunden ist, ist im inneren Hohlraum des Zentralrohres 1 ein Trennboden 15 vorgesehen, der diesen inneren Hohlraum des Zentralrohres 1 hermetisch in einen Bereich, der mit der breiten Öffnung des Strömungsweges 13, 14 und einen Bereich, der mit der schmalen Öffnung des Strömungsweges 13,14 verbunden ist, unterteilt.

Wie bereits eingangs erwähnt, ist die Wickelmembran-Filterkerze in der Darstellung der Fig. 1 in abgerollter Form gezeigt. Aus der in Fig. 1 dargestellten Struktur wird die Wickelmembran-Filterkerze dadurch erhalten, daß man das Zentralrohr 1 in der Darstellung der Fig. 1 nach rechts unter Aufwickeln der Membranen 3,4 und der durch diese gebildeten Tasche rollt.

Für den bestimmungsgemäßen Betrieb der in Fig. 1 gezeigten Wickelmembran-Filterkerze wird der Zulauf des zu behandelnden Mediums unter Druck in Richtung des Pfeiles 16 in den inneren Hohlraum des Zentralrohres 1 eingeleitet. Von dort tritt der Zulauf durch die Durchtrittsöffnungen 2 in Richtung der Pfeile 17 hindurch in Richtung des Strömungspfeiles 18 in den im Strömungskanal 10 gebildeten Teilkanal 13 zwischen den beiden Membranen 3,4 ein. Der Strom des zu behandelnden Mediums tritt nach dem Durchströmen des Teilkanals 13 in ein übliches Filtergehäuse ein, wie dies weiter unten beschrieben ist, wird dann umgelenkt und tritt dann wieder in den Teilkanal 14 ein. Aus diesem Teilkanal 14 strömt das zu behandelnde Medium als Konzentrat in Richtung des Strömungspfeiles 20 durch die Durchtrittsöffnungen 2' hindurch wieder in den inneren Hohlraum des Zentralrohrs 1 ein und verläßt dieses in Richtung des Strömungspfeils 21. Dabei wird ein Vermischen des Zulaufstroms 16 mit dem Konzentratablaufstrom 21 durch den Trennboden 15 verhindert, der das Zentralrohr 1 in einen Zulaufraum 22 und einen hermetisch von diesen getrennten Konzentratablaufraum 23 unterteilt.

In der aus der Fig. 1 erkennbaren Weise verringert sich der dem konstanten Volumenstrom des zu behandelnden Mediums zur Verfügung stehende Strömungsquerschnitt in den Kanälen 13 und 14 vom Strömungseintritt 18 kontinuierlich bis zum Strömungsaustritt 20. Dadurch nimmt also die Strömungsgeschwindigkeit des zu behandelnden Mediums relativ zu den Membranen 3,4 direkt proportional zur Konzentration des Mediums zu. Dadurch wird eine optimale Belastungsverteilung und optimale Ausnutzung der Membran mit dem Ergebnis einer langen Standzeit erzielt.

Bei dem in Fig. 1 gezeigten Ausführungsbeispiel der Wickelmembran-Filterkerze ist der Strömungskanal 10 an der Wickelaußenkante 30 offen. Durch Verkleben der Windungen der Membrantaschen miteinander entlang der Wickelstirnseiten durch Klebnähte 31,32 und in axialer Richtung auf der Wickelaußenseite durch eine Klebnaht 33 wird ein allseitig geschlossener Permeatkanals 34 gebildet. Ein gitterförmiger Abstandhalter 11 ist im Permeatkanal angeordnet und nicht aus diesem herausgeführt. Der Abstandhalter 35 des Strömungskanals 10 ist hingegen in der Fig. 1 angedeuteten Weise aus der zwischen den Membranen 3,4 gebildeten Tasche herausgeführt und ist dabei in der dargestellten Weise länger als die Membrantasche 3,4 ausgebildet, so daß ein bis zwei Windungen als äußere Schutzhülle um den Wickel herumgeführt sind. Das Aufrollen des Wickels erfolgt mit einer solchen Spannung, daß die Membranen 3,4 dichtend an die Trennwand 12 angedrückt werden, so daß die Teilkanäle hydrodynamisch voneinander getrennt sind.

Bei dem in Fig. 1 gezeigten Ausführungsbeispiel reicht die Trennwand 12 bis vollständig zur offenen Kante 30 der Membrantasche 3,4, so daß sich die Teilkanäle 13 und 14 frei zur Wickelaußenseite öffnen. Der aus dem Teilkanal 13 austretende und in den Teilkanal 14 wieder eintretende umgelenkte Strom 19 des zu behandelnden Mediums wird bei innerhalb eines in den Figuren nicht separat dargestellten üblichen Filtergehäuses umgelenkt, in dem die Wickelmembran-Filterkerze untergebracht ist.

Der Permeatkanal 34 ist auf der Innenseite des Wickels mit Durchtrittsöffnungen 2" verbunden, die in der gleichen Weise wie die Durchtrittsöffnungen 2,2' axial im Mantel des Zentralrohres 1 angeordnet sind, diesen jedoch diametral gegenüberliegen. Eine im inneren Hohlraum des Zentralrohres 1 axial verlaufende Querwand 36 trennt dabei hermetisch die axial übereinanderliegend angeordnete Zulaufkammer 22 und Konzentratablaufkammer 23 von einem Permeatsammelkanal 37, in den das Permeat aus dem Permeatkanal 34 durch die Durchtrittsöffnungen 2" hindurch in Richtung des Strömungspfeiles 38 (Fig. 2) eintritt. Aus dem Permeatsammelkanal 37 kann das Permeat dann beispielsweise in Richtung des Strömungspfeiles 39 (Fig. 1) axial und zentral aus der Wickelmembran-Filterkerze herausgeführt werden.

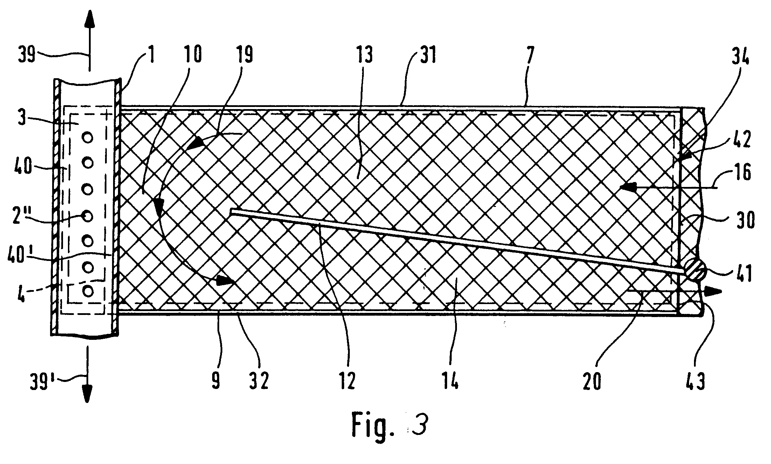

Ein zweites Ausführungsbeispiel der Erfindung ist in der Fig. 3 gezeigt, wobei der Membranwickel ebenfalls abgerollt dargestellt ist.

Das in Fig. 3 dargestellte Ausführungsbeispiel der Wickelmembran-Filterkerze gemäß der Erfindung unterscheidet sich von dem in Fig. 1 gezeigten Ausführungsbeispiel dadurch, daß die den Strömungskanal 10 auf seiner am Zentralrohr 1 liegenden Seite geschlossen ist und sich die Trennwand 12 nicht bis zum Zentralrohr 1 erstreckt, sondern vor diesem so endet, daß eine ungehinderte Umlenkung des Stroms des zu behandelnden Mediums im Sinne der Strömungspfeile 19 erfolgen kann. Der in den ersten Teilkanal 13 eintretende Zulaufstrom 16 des zu behandelnden Mediums wird also von der Wickelaußenseite her, genauer gesagt von der Außenseite des Wickelmantels her, aus einem Druckgefäß, in dem die Wickelmembran-Filterkerze angeordnet ist, in den ersten Teilkanal 13 hinein geführt. Dieser Zulaufstrom wird dann in der durch die Strömungspfeile 19 angedeuteten Weise vor dem und an dem Zentralrohr 1 in den Konzentratkanal 14 umgelenkt wird und aus diesem in Richtung des Strömungspfeiles 20 wiederum in das Filtrationsgehäuse, das den Wickel umgibt, hinausgeführt. Die Durchtrittsöffnungen 2" für den Permeatablauf sind dabei so angeordnet, daß die beiden einander diametral gegenüberliegenden Klebnähte 40,40' für die Membranen 3,4 an dem der Reihe der Durchtrittsöffnungen 2" gegenüberliegenden Mantelwandabschnitt des Zentralrohres 1, der keinerlei Durchtrittsöffnungen aufweist, anliegen. Die zur Wickelaußenseite in das umgebende Druckgefäß hinein offenen Teilkanäle 13,14 sind hydrodynamisch durch geeignete Druckmittel, die zwischen Wickelmantel und der Innenwand des Druckgehäuses angeordnet sind, hydrodynamisch hermetisch voneinander getrennt, beispielsweise in der hier in Fig. 3 gezeigten Weise durch einen weichen O-Ring 41. Der Wickel gemäß Fig. 3 hat also auf seiner äußeren Mantelfläche einen Zulaufanschluß 42 für das zu behandelnde Medium und einen Konzentratablaufanschluß 43, während das Permeat in der im Zusammenhang mit der Figur 1 und 2 beschriebenen Weise in einer oder den beiden Strömungsrichtungen 39,39' abgeführt werden kann.

## Patentansprüche

1. Wickelmembran-Filterkerze mit einem mindestens eine axiale Reihe von Durchtrittsöffnungen (2") im Mantel aufweisenden Zentralrohr (1), auf dem mindestens zwei Membranen (3,4) spiralig aufgewickelt sind, die mindestens einen an den Wickelstirnseiten geschlossenen Strömungskanal (10) einschließen und von denen eine auf ihrer Außenseite mit einem Abstandshalter (11) ausgestattet ist, und mit mindestens einer fluiddichten, auf einer Schraubenlinie liegenden Trennwand (12), die den Strömungskanal (10), bezogen auf den Wickel, in mindestens zwei axial übereinanderliegende, als aufeinanderfolgende Teilabschnitte ein und desselben Strömungsweges (19) geschaltete Teilkanäle (13,14) unterteilt, dadurch **gekennzeichnet,** daß das Zentralrohr (1) eine weitere axiale Reihe von Durchtrittsöffnungen (2,2') im Mantel aufweist, daß der Strömungskanal (10) an der Wickelaußenkante (30) und auch am Zentralrohr (1) offen ausgebildet ist, daß sich die Trennwand (12) über die gesamte Länge der den Strömungskanal (10) bildenden Membranen (3,4) erstreckt, wobei die radial inneren Enden der beiden Teilkanäle (13,14) mit den weiteren Durchtrittsöffnungen (2,2') im Zentralrohr (1) verbunden sind, daß der Permeatkanal (34) als dreiseitig (31,32,33) ge schlossener Strömungskanal zwischen den Windungen der durch die Membranen (3,4) gebildeten, den Strömungskanal (10) einschließenden Membrantasche ausgebildet ist und über die Durchtrittsöffnungen (2") im Zentralrohr (1) mit einem im Inneren des Zentralrohres (1) ausgebildeten Permeatablaufkanal (37) verbunden ist, daß im inneren Hohlraum des Zentralrohres (1) ein Trennboden (15) derart angeordnet ist, daß eine Zulaufkammer (22) und eine hydrodynamisch davon getrennte Konzentratablaufkammer (23) gebildet werden, wobei die Zulaufkammer (22) mit dem Teilkanal (13) und die Konzentratablaufkammer (23) mit dem Teilkanal (14) in Verbindung stehen, und daß der Permeatablaufkanal (37) durch eine axial verlaufende Querwand (36) von der Zulaufkammer (22) und der Konzentratablaufkammer (23) getrennt ist.

2. Wickelmembran-Filterkerze mit einem mindestens eine axiale Reihe von Durchtrittsöffnungen (2") im Mantel aufweisenden Zentralrohr (1), auf dem mindestens zwei Membranen (3,4) spiralig aufgewickelt sind, die mindestens einen an den Wickelstirnseiten geschlossenen Strömungskanal (10) einschließen und von denen eine auf ihrer Außenseite mit einem Abstandshalter (11) ausgestattet ist, und mit mindestens einer fluiddichten, auf einer Schraubenlinie liegenden Trennwand (12), die den Strömungskanal (10), bezogen auf den Wickel, in mindestens zwei axial übereinanderliegende, als aufeinanderfolgende Teilabschnitte ein und desselben Strömungsweges (19) geschaltete Teilkanäle (13,14) unterteilt, dadurch **gekennzeichnet,** daß der Strömungskanal (10) an der Wickelaußenkante (30) offen und am Zentralrohr (1) geschlossen ist, daß die Teilkanäle (13,14) an der geschlossenen Strömungskanalseite (40) frei kommunizierend miteinander verbunden sind, daß Dicht- oder Trennmittel (41) vorhanden sind, die die beiden Teilkanalanschlüsse (42,43) der sich frei in ein die Filterkerze umschließendes Gehäuse öffnenden Teilkanäle (13,14) hydrodynamisch voneinander trennen und daß der Permeatkanal (34) als dreiseitig (31,32,33) geschlossener Strömungskanal zwischen den Windungen der durch die Membranen (3,4) gebildeten, den Strömungskanal (10) aufweisenden Membrantasche ausgebildet ist.

3. Wickelmembran-Filterkerze nach Anspruch 1 oder 2, dadurch **gekennzeichnet,** daß die Höhe der Schraubenlinie gleich der halben axialen Höhe des Wickels ist.

4. Wickelmembran-Filterkerze nach einem der Ansprüche 1 bis 3, dadurch **gekennzeichnet,** daß der in den Strömungskanal (10) eingefügte Abstandshalter (35) gitterartig sowie flächig ausgestaltet ist und mit der Trennwand (12) als elastisches Dichtelement homogen verbunden oder einstückig ausgebildet ist, wobei die Membranen (3,4) mit der Trennwand (12) verklebt oder verschweißt oder lediglich durch Wickelspannung angepreßt fluiddicht verbunden sind.

5. Wickelmembran-Filterkerze nach einem der Ansprüche 1 bis 5,
dadurch **gekennzeichnet,**
daß auch der Strömungskanal (10) in seinem Inneren mit einem Abstandshalter (11) ausgestattet ist.

**Claims**

1. Wound membrane filter tube having a central tube (1) comprising at least one axial series of penetration openings (2'') in its envelope, on which central tube (1) there are wound spirally at least two membranes (3,4), which enclose at least one flow channel (10) closed on the faces of the winding, one of the membranes being provided with a spreader (11) on its outer surface, and having at least one fluid-tight dividing wall (12) lying on a helix, which wall subdivides the flow channel (10), with respect to the winding, in at least two channel sections (13,14) lying axially one above the other and being connected as successive partial sections of the same flow path (19),
**characterized** in that
the central tube (1) comprises a further axial series of penetration openings (2,2') in its envelope,
that the flow channel (10) is open at the outer border (30) of the winding and also at the central tube (1),
that the dividing wall (12) extends over the whole length of the membranes (3,4) forming the flow channel (10), the radially inner ends of the two channel sections (13,14) being connected with the further penetration openings [2,2'] in the central tube (1),
that the permeate channel (34) is formed as a flow channel, which is closed on three sides (31,32,33), between the windings of the membrane pocket formed by the membranes (3,4) and enclosing the flow channel (10) and is connected with a permeate discharge channel (37) formed in the inside of said central tube (1) via said penetration openings (2'') in said central tube (1),
that a partition wall (15) is provided in the inner cavity of the central tube (1), such that an inlet chamber (22) and a concentrate discharge chamber (23) hydrodynamically separated therefrom are formed, the inlet chamber (22) being in connection with the channel section (13) and the concentrate discharge chamber (23) in connection with the channel section (14), and
that the permeate discharge channel (37) is separated from the inlet chamber (22) and the concentrate discharge chamber (23) by an axially disposed transversial wall (36).

2. Wound membrane filter tube having a central tube (1) comprising at least one axial series of penetration openings (2'') in its envelope, on which central tube (1) there are wound spirally at least two membranes (3,4), which enclose at least one flow channel (10) closed on the faces of the winding, one of the membranes being provided with a spreader (11) on its outer surface, and having at least one fluid-tight dividing wall (12) lying on a helix, which wall subdivides the flow channel (10), with respect to the winding, in at least two channel sections (13,14) lying axially one above the other and being connected as successive partial sections of the same flow path (19),
**characterized** in that
flow channel (10) is open at the outer border (30) of the winding and is closed at the central tube (1),
that the channel sections (13,14) are interconnected and freely communicating at the closed side (40) of the flow channel,
that sealing or separating means (41) are provided, which hydrodynamically separate the two channel section connections (42,43) of the channel sections (13,14) opening freely into a housing enclosing the filter tube, and
that the permeate channel (34) is formed as a flow channel, which is closed on three sides (31,32,33), between the windings of the membrane pocket formed by the membranes (3,4) and comprising the flow channel (10).

3. Wound membrane filter tube according to claim 1 or 2,
**characterized** in that
the height of the helix equals the half axial height of the winding.

4. Wound membrane filter tube according to one of the claims 1 to 3,
**characterized** in that
the spreader (35) inserted into the flow channel (10) has grid-like and sheet-like structure and is connected homogeneously with the dividing wall (12) or is formed as one single piece for forming an elastic sealing element, the membranes (3,4) being connected fluid-tightly with the dividing wall (12) by gluing or bonding or only being pressed together by the winding tension.

5. Wound membrane filter tube according to one of the claims 1 to 4,
**characterized** in that
also the flow channel (10) in its inside is provided with a spreader (11).

**Revendications**

1. Bougie filtrante à membrane enrouleé comportant un tuyau central (1) comprenant dans son enveloppe au moins une série axiale d'ouvertures de passage (2''), sur lequel deux membranes (3,4) sont enroulés en manière à spirale, les membranes entourant au moins un conduit de courant (10) fermé aux surfaces frontales d'enroulement et une des membranes étant pourvue d'un écarteur (11) sur sa face externe, et comportant au moins une paroi de séparation (12) étanche pour fluides et étant situeé sur une hélice, la paroi subdivisant le conduit de courant (10), relatif au rouleau, en au moins deux conduits partiels (13,14) qui se trouvent axialement l'un sur l'autre et sont couplés comme tronçons successifs du même parcours,
caractérisée en ce que
le tuyau central (1) comporte dans son enveloppe une ultérieure série axiale d'ouvertures de passage (2,2'), en ce que le conduit de courant (10) est ouverte au bord extérieur d'enroulement (30) et aussi au tuyau central (1), en ce que la paroi de séparation (12) s'étend sur toute la longueur des membranes (3,4) formant le conduit de courant (10), les extremités radialment intérieures des deux conduits partiels (13,14) étant joints avec les ultérieures ouvertures de passage (2,2') dans le tuyau central (1),
en ce que le conduit de permeat (34) est formé comme conduit de courant fermé à trois côtés (31,32,33) entre les enroulements de la poche de membrane constituée par les membranes (3,4) et entourant le conduit de courant (10) et est joint avec un conduit de décharge du permeat (37) formé à l'intérieur du tuyau central à travers les ouvertures de passage (2'') dans le tuyau central (1),
en ce qu'un plateau de séparation (15) est placé dans la cavité intérieure du tuyau central (1), tel qu'une chambre d'arrivée (22) et une chambre de décharge du concentré (23) étant séparée hydrodynamiquement de cette dernière sont formées, la chambre d'arrivée (22) étant en connexion avec le conduit partiel (13) et la chambre de décharge du concentré (23) étant en connexion avec le conduit partiel (14), et
en ce que le conduit de décharge du permeat (37) est séparé de la chambre d'arrivée (22) et de la chambre de décharge du concentrat (23) par une paroi transversale (36) placée axialement.

2. Bougie filtrante à membrane enrouleé comportant un tuyau central (1) comprenant dans son enveloppe au moins une série axiale d'ouvertures de passage (2'') sur lequel deux membranes (3,4) sont enroulés en manière à spirale, les membranes entourant au moins un conduit de courant (10) fermé aux surfaces frontales d'enroulement et une des membranes étant pourvue d'un écarteur (11) sur sa face externe, et comportant au moins une paroi de séparation (12) étanche pour fluides et étant situeé sur une hélice, la paroi subdivisant le conduit de courant (10), relatif au rouleau, en au moins deux conduits partiels (13,14) qui se trouvent axialement l'un sur l'autre et sont couplés comme tronçons successifs du même parcours (19),
caracterisée en ce que
le conduit de courant (10) est ouverte au bord extérieur d'enroulement (30) et fermé au tuyau central (1),
en ce que les conduits partiels (13,14) sont joints au côté fermé (40) du conduit de courant, tel qu'ils peuvent communiquer librement entre eux,
en ce que des moyens pour étancher ou séparer (41) sont prévus, qui séparent hydrodynamiquement l'un de l'autre des deux raccords (42,43) des conduits partiels (13,14), ces raccords débouchant librement dans le boîtier entourant la bougie filtrante, et
en ce que le conduit de permeat (34) est formé comme conduit de courant fermé à trois côtés (31,32,33) entre les enroulements de la poche de membrane constituée par les membranes (3,4) et comportant le conduit de courant (10).

3. Bougie filtrante à membrane enroulée selon l'une des revendications 1 ou 2,
caractérisée en ce que
la hauteur de l'hélice est égale à la moitié de la hauteur axiale du rouleau.

4. Bougie filtrante à membrane enroulée selon l'une des revendications 1 à 3,
caracterisée en ce que
l'écarteur (35) inséré dans le conduit de courant (10) est formé en forme de grillage et en nappe, et en ce qu'il est joint homogènement avec la paroi de séparation (12) ou formé dans une seule pièce pour former un élément étanchant élastique, les membranes (3,4) étant collées ou soudées avec ou seulement pressées par tension d'enroulement contre la paroi de séparation (12) en manière étanche pour fluides.

5. Bougie filtrante à membrane enroulée selon l'une des revendications 1 à 4,
caracterisée en ce que
aussi le conduit de courant (10) à son intérieur est muni d'un écarteur (11).

Fig. 1

Fig. 2

Fig. 3